# EUROPEAN PATENT APPLICATION

(11) **EP 4 793 078 A1**
(43) Date of publication of application: **19.08.2026**
(21) Application number: 24884563.8
(22) Date of filing: 24.10.2024
(51) Int. Cl.: B60K 35/00, B60K 35/231, B60R 11/02

(54) **DISPLAY SYSTEM, VEHICLE, AND CABIN SYSTEM**

(30) Priority: 31.10.2023 CN 202311439626
(71) Applicant: HUAWEI TECHNOLOGIES CO., LTD., Shenzhen 518129 (CN)
(72) Inventor: XU, Liguo, Shenzhen, Guangdong 518129 (CN); LI, Jingke, Shenzhen, Guangdong 518129 (CN); HE, Yongqi, Shenzhen, Guangdong 518129 (CN)
(74) Representative: Goddar, Heinz J.
(86) International application number: PCT/CN2024/127052
(87) International publication number: WO 2025/092559

(57) **Abstract**

A display system (100) used in a transportation means includes: a display apparatus (101) and a first drive apparatus (103). The display apparatus (101) is an enclosed whole having internal space. The display apparatus (101) is mounted in a dashboard (102) of a cockpit, and includes an image generation unit (201), an image magnification unit (203), a window unit (202), and a housing (204). The image generation unit (201), the image magnification unit (203), and the window unit (202) are configured to generate a virtual image for viewing by a human eye. The housing (204) is configured to enclose the image generation unit (201) and the image magnification unit (203). The first drive apparatus (103) is configured to adjust a status of the display apparatus (101) to a stowed state or a display state. The display system (100) can provide intelligent visual experience for a passenger in the cockpit while maintaining aesthetics of the cockpit. A transportation means and a cockpit system that include the display system (100) are further provided.

## Description

This application claims priority to Chinese Patent Application No. 202311439626.8, filed with the China National Intellectual Property Administration on October 31, 2023 and entitled "DISPLAY SYSTEM AND TRANSPORTATION MEANS", which is incorporated herein by reference in its entirety.

### TECHNICAL FIELD

Embodiments of this application relate to the field of display technologies and the field of intelligent vehicle driving technologies, and more specifically, to a display system and a transportation means.

### BACKGROUND

Vehicles have become an indispensable transportation means in people's daily life. With development of intelligent vehicles, people's application requirements for the vehicles have been upgraded from a simple transportation means to living space with specific information obtaining and entertainment. In-vehicle display technologies have become a hot research direction. A vehicle-mounted display apparatus is mounted in the vehicle, so that a passenger in the vehicle can obtain information or perform activities such as entertainment and video watching by using the vehicle-mounted display apparatus. This provides an intelligent application scenario of cockpit space.

In some cockpits, display apparatuses are mounted on dashboards of vehicles. How to maintain aesthetics of the dashboard while ensuring functionality of the display apparatus to improve viewing experience of a user is a problem to be resolved.

### SUMMARY

This application provides a display system and a transportation means. The display system provided in this application can not only provide intelligent visual experience for a passenger in a cockpit but also maintain aesthetics of the cockpit.

According to a first aspect, an embodiment of this application provides a display system. The system includes: a display apparatus and a first drive apparatus. The display apparatus is mounted in a dashboard of a cockpit, the display apparatus includes an image generation unit, an image magnification unit, a window unit, and a housing. The window unit includes a first surface and a second surface, the housing includes a third surface and a fourth surface, and an end that is of the third surface and that is close to the fourth surface is closely connected to an end that is of the fourth surface and that is close to the third surface. The image generation unit is configured to emit first imaging light to the window unit, where the first imaging light is used to generate a first virtual image. The window unit is configured to reflect, on the first surface, the first imaging light that is from the image generation unit to the image magnification unit, and transmit, through the first surface to the second surface, the first imaging light that is from the image magnification unit, for a human eye to view the first virtual image through the first imaging light emitted from the second surface. The image magnification unit is configured to reflect the first imaging light that is from the window unit to the window unit. The housing is configured to enclose the image generation unit and the image magnification unit, where an end that is of the third surface and that is away from the fourth surface is connected to an upper edge of the window unit, and an end that is of the fourth surface and that is away from the third surface is connected to a lower edge of the window unit, for the display apparatus to form an enclosed whole having internal space and the first surface of the window unit to be enclosed in the internal space. The first drive apparatus is configured to adjust a status of the display apparatus to a stowed state or a display state, where the stowed state is a state in which the second surface is embedded into the dashboard, for the third surface to form a part of a knee protection panel of the dashboard and the fourth surface to form a part of a dashboard surface of the dashboard, the display state is a state in which the third surface is separated from the knee protection panel of the dashboard, and the fourth surface is separated from the dashboard surface of the dashboard, for the second surface to be opposite to the human eye.

It should be noted that in the solution of this application, the display apparatus may be mounted on a dashboard of a driver seat, or mounted on a dashboard of a front passenger seat, or mounted on a dashboard of the driver seat and a dashboard of the front passenger seat. This is not limited in this application.

It should be further noted that the display system provided in this application may automatically switch the status of the display apparatus, or may switch the status of the display apparatus based on a manual operation of a user. For example, when the display system automatically switches the status of the display apparatus, the first drive apparatus may be implemented in a manner of electric, magnetic, or the like. In this case, the first drive apparatus may be a motor, a magnet, or the like. For example, after detecting, by using some detectors, that the user sits in the seat, the first drive apparatus starts automatic switching, so that the display apparatus that is stowed in the dashboard moves out of the dashboard, and the status is changed to the display state. When the display system manually switches the status of the display apparatus, the first drive apparatus may be a manual lever, a manual rotating valve, or the like.

It should be noted that, in the solution of this application, when the display apparatus is in the display state, the display apparatus does not necessarily provide a display image for the user. This depends on whether an image source or a video source is loaded into the display apparatus, or depends on whether the user needs to view an image. For example, in some scenarios, when it is detected that the user sits in the seat, the display system automatically changes the status of the display apparatus to the display state. When the user wants to view an image or a video, the user provides a video source for the display apparatus, or the user starts a video source connected to the display apparatus. In this case, the display apparatus provides a display image for the user.

Based on the foregoing solution, according to the display system provided in this application, when the display apparatus is in the stowed state, the user does not use the display apparatus to view a video and an image, and the display apparatus is stowed in the dashboard, thereby saving space of the dashboard. In addition, the display apparatus is stowed in the dashboard, so that the window unit of the display apparatus is further protected from damage such as scratches. In addition, the display apparatus in the stowed state can further avoid causing secondary damage to the user when a safety accident occurs. When the display apparatus is in the display state, the user views a video image through the imaging light emitted from the second surface of the window unit. This meets intelligent cockpit experience of the user.

With reference to the first aspect, in some implementations of the first aspect, when the display apparatus is in the stowed state, a radian of a joint between the third surface and the fourth surface is the same as a radian between the knee protection panel and the dashboard surface.

Based on the foregoing solution, the third surface and the fourth surface of the display apparatus can be seamlessly integrated with the knee protection panel and a surface of the dashboard respectively, thereby improving aesthetics of a cockpit system.

With reference to the first aspect, in some implementations of the first aspect, when the display apparatus is in the display state, the dashboard surface and a position used to stow the display apparatus present a stepped surface.

With reference to the first aspect, in some implementations of the first aspect, the first drive apparatus is mounted inside the display apparatus or in the dashboard.

With reference to the first aspect, in some implementations of the first aspect, the display apparatus further includes a connection unit, and the connection unit is connected to the first drive apparatus. The first drive apparatus is specifically configured to drive the connection unit to operate. The connection unit is configured to adjust the status of the display apparatus to the stowed state or the display state during operating.

With reference to the first aspect, in some implementations of the first aspect, the first drive apparatus is further configured to adjust a first angle of the display apparatus to a second angle, for a user to view the first virtual image at the second angle through the window unit.

It should be noted that, in the solution of this application, an angle (including the first angle and the second angle) of the display apparatus may be a tilt angle of the display apparatus. When the display apparatus is adjusted from the first angle to the second angle, the display apparatus may shake up and down in a vertical direction, which is similar to "nodding" effect. Alternatively, an angle of the display apparatus may be a swing angle (or referred to as a horizontal deviation angle) of the display apparatus. When the display apparatus is adjusted from the first angle to the second angle, the display apparatus may swing left and right in a horizontal direction, which is similar to "head shaking" effect. Alternatively, an angle of the display apparatus may include simultaneous changes in both a tilt angle and a swing angle of the display apparatus. When the display apparatus is adjusted from the first angle to the second angle, the display apparatus may be adjusted in an entire spatial angle.

In the solution of this application, automatic adjustment or manual adjustment of the angle of the display apparatus may be implemented based on a function of the first drive apparatus. When automatic adjustment of the angle of the display apparatus is implemented, intelligent performance of a vehicle-mounted display system can be improved, thereby providing more intelligent experience for the user.

With reference to the first aspect, in some implementations of the first aspect, the display system further includes a first obtaining apparatus and a processing apparatus, and the first obtaining apparatus is connected to the processing apparatus. The first obtaining apparatus is configured to: when the display apparatus is at the first angle, obtain one or more first images including the human eye, and send the one or more first images to the processing apparatus. The processing apparatus generates a first adjustment amount based on the one or more first images, and sends the first adjustment amount to the first drive apparatus. The first drive apparatus is specifically configured to adjust the first angle to the second angle based on the first adjustment amount.

The display system provided in this application can generate the angle adjustment amount based on the one or more images including the human eye, so that the display system provided in this application can implement automatic adjustment effect based on the human eye.

With reference to the first aspect, in some implementations of the first aspect, the first obtaining apparatus is further configured to: when the display apparatus is at the second angle, obtain one or more second images including the human eye, and send the one or more second images to the processing apparatus. The processing apparatus further generates a second adjustment amount based on the one or more second images, and sends the second adjustment amount to the image generation unit. The image generation unit is configured to: generate an image of a corresponding size based on the second adjustment amount, and emit second imaging light. The window unit is configured to reflect the second imaging light that is from the image generation unit to the image magnification unit, and transmit the second imaging light that is from the image magnification unit, for the user to view, at the second angle through the window unit, a second virtual image formed by the second imaging light. The image magnification unit is configured to reflect the second imaging light that is from the window unit to the window unit.

Based on the foregoing solution, according to the display system provided in embodiments of this application, not only the angle of the display apparatus can be adjusted, but also a size of a virtual image can be further obtained through calculation based on the one or more second images, to ensure that the user can view a complete virtual image when the angle cannot be adjusted (for example, a limit of angle adjustment of the display apparatus is reached), thereby further improving performance reliability of the display system.

With reference to the first aspect, in some implementations of the first aspect, the display system further includes: a second obtaining apparatus, a seat, and a second drive apparatus. The user sits in the seat to view the first virtual image, the second drive apparatus is connected to the seat, and the second drive apparatus is connected to the processing apparatus. The second obtaining apparatus is configured to obtain user information, and send the user information to the processing apparatus. The processing apparatus is configured to generate a third adjustment amount based on the user information and a relative height between a height of the display apparatus and a height of the human eye, and send the third adjustment amount to the second drive apparatus. The height of the display apparatus is a height of a center of the window unit of the display apparatus relative to a floor of the cockpit, the height of the human eye is a height of the human eye relative to the floor of the cockpit, and the relative height between the height of the display apparatus and the height of the human eye meets that the user is within a viewing angle range when viewing the first virtual image. The second drive apparatus is configured to adjust a height of the seat based on the third adjustment amount. With reference to the first aspect, in some implementations of the first aspect, a value range of a viewing angle θ is -1.5' ≤ θ1 ≤ 0°.

Based on the foregoing solution, this application provides a display system, so that the relative height between the height of the display apparatus and the height of the human eye can be adjusted by adjusting the height of the seat, and the user is within the viewing angle range when viewing the virtual image of the display apparatus. This improves user experience.

With reference to the first aspect, in some implementations of the first aspect, the user information includes at least one of the following: the height of the human eye, a height of the user, a human-eye position in an image, and a weight of the user.

According to a second aspect, an embodiment of this application provides a processing device, used in the display system provided in any one of the first aspect and the implementations of the first aspect. The processing device may include one or more units and/or modules. The processing device may include an input/output interface. Optionally, the input/output interface may be an input/output circuit.

Alternatively, the processing device may be a chip, a chip system, a processor, a processing circuit, a logic circuit, or the like.

If no special description is provided for an operation such as obtaining related to the processing device, or if the operation does not conflict with an actual function or internal logic of the processing device in related descriptions, the operation may be understood as an operation such as receiving or inputting by a processor. This is not limited in this application.

According to a third aspect, an embodiment of this application provides a chip. The chip includes the processing device and the communication interface according to the second aspect, and the processor obtains user information through the communication interface.

According to a fourth aspect, an embodiment of this application provides a cockpit system. The cockpit system includes the display system provided in any one of the first aspect and the implementations of the first aspect.

According to a fifth aspect, an embodiment of this application provides a transportation means, including the system provided in any one of the first aspect and the implementations of the first aspect.

For beneficial effect brought by the second aspect to the fifth aspect, refer to the descriptions of the beneficial effect in the first aspect. Details are not described herein again.

### BRIEF DESCRIPTION OF DRAWINGS

FIG. 1 is a diagram of an application scenario of a first display system 100 according to this application;
FIG. 2 is a diagram of a display apparatus 101 applicable to an embodiment of this application;
FIG. 3 is a diagram of a display apparatus 101 in a stowed state according to an embodiment of this application;
FIG. 4 is a diagram of a display apparatus 101 in a display state according to an embodiment of this application;
FIG. 5 is a diagram of a structure of a second display system 500 according to an embodiment of this application;
FIG. 6 is a diagram of an ideal human-eye position and adjustment of a first human-eye position in a vertical direction according to an embodiment of this application;
FIG. 7 is an effect diagram of adjustment of a first human-eye position and angle rotation of a display apparatus 101 according to an embodiment of this application;
FIG. 8 is a diagram of an ideal human-eye position and adjustment of a first human-eye position in a horizontal direction according to an embodiment of this application;
FIG. 9 is a diagram of an ideal human-eye position and simultaneous adjustment of a first human-eye position in a vertical direction and a horizontal direction according to an embodiment of this application;
FIG. 10 is a diagram of a human-eye depth according to an embodiment of this application;
FIG. 11 is a diagram of a third display system 1100 according to an embodiment of this application;
FIG. 12 is a diagram of a circuit of a display apparatus according to an embodiment of this application; and
FIG. 13 is a diagram of a possible functional framework of a transportation means according to an embodiment of this application.

### DESCRIPTION OF EMBODIMENTS

The following describes technical solutions of embodiments in this application with reference to accompanying drawings.

For ease of understanding of embodiments of this application, the following descriptions are provided.

First, the terms such as "first", "second", and various numeric numbers in the following text descriptions or accompanying drawings in embodiments of this application are merely used for differentiation for ease of description, but are not used to limit the scope of embodiments of this application. For example, the first virtual image and the second virtual image are virtual images generated through different imaging light. For example, the first adjustment amount, the second adjustment amount, and the third adjustment amount are used to separately distinguish an adjustment amount of angle adjustment, an adjustment amount of image framing adjustment, and an adjustment amount of a height of a seat.

Second, the terms "include", "have" and any other variants in embodiments of this application shown below are intended to cover the non-exclusive inclusion. For example, a system, product, or device that includes a series of units is not necessarily limited to those units expressly listed, but may include other units not expressly listed or inherent to such a product or device.

Third, in embodiments of this application, the term such as "example" or "for example" represents an example, an illustration, or a description. Any embodiment or design solution described as "example" or "for example" should not be explained as being more preferred or having more advantages than another embodiment or design solution. The word like "example" or "for example" is used to present a related concept in a specific manner for ease of understanding.

Fourth, in embodiments of this application, imaging light is light carrying an image (or image information), used to generate an image, and may also be referred to as image light or the like.

Fifth, in the accompanying drawings of this application, for ease of description, thickness, a size, and a shape of each optical element are slightly exaggerated. In particular, the shapes of the optical elements shown in the accompanying drawings are shown by embodiments, and the accompanying drawings are merely examples and not drawn strictly to scale.

Sixth, unless otherwise limited, all terms (including technical and scientific terms) used in this application have same meanings as understood usually by a person of ordinary skill in the art to which this application belongs. It should be further understood that, terms (such as those defined in common dictionaries) should be interpreted as having meanings consistent with their meanings in the context of related technologies, and will not be interpreted in an idealized or excessive formal sense, unless expressly defined in this specification.

With rapid development of intelligent vehicles, the vehicles play increasing roles in people's life, and requirements for vehicle-mounted display gradually increase, for example, providing entertainment services such as gaming and movie watching for a passenger during a long journey, or providing a private office display environment for office personnel.

To provide an in-vehicle display function, directly mounting a display is a common solution. For example, a liquid crystal display (liquid crystal display, LCD) may be mounted on a dashboard of a cockpit for use by a person in a vehicle. However, an image viewed on such a display device is related to a screen size of the display device. To implement viewing experience with large-size image framing, the screen size of the display device needs to be large. This not only causes high costs, but also causes space congestion in the vehicle.

In view of this, an embodiment of this application provides a display system, so that large-image-framing and long-distance visual experience can be provided for a user. In addition, because a volume is small, the display system can be hidden in internal space of a dashboard when the user does not use the display system, thereby saving space in a vehicle.

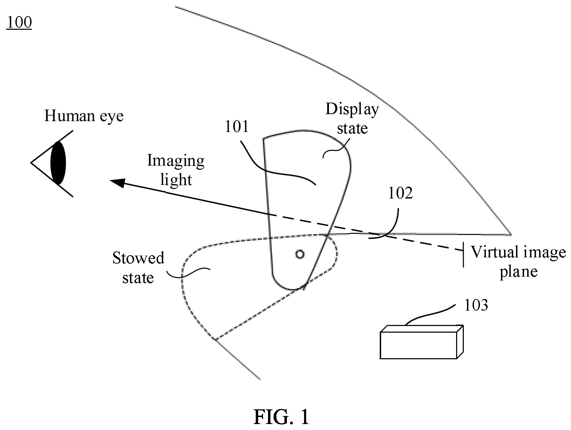

FIG. 1 is a diagram of an application scenario of a first display system 100 according to this application. As shown in FIG. 1, the display system 100 includes a display apparatus 101 and a drive apparatus 103 that are disposed on a dashboard 102. The display apparatus 101 can generate a magnified virtual image at a long distance through an input of an external video signal (which may also be referred to as a signal source), to provide large-image-framing and long-distance visual experience for a viewer, so that requirements of a user in a plurality of application scenarios such as recreation and business office are met. The display apparatus 101 may be mounted on the dashboard before delivery. Alternatively, the display apparatus 101 may be mounted on the dashboard after the dashboard is modified after delivery. This is not limited in this application.

It may be understood that the display system 100 may be used in the following transportation means including but not limited to: a car, a truck, a bus, a ship, an airplane, a helicopter, a recreational vehicle, a train, and the like.

In the solution of this application, the display apparatus 101 may be disposed on a dashboard of a driver seat, or disposed on a dashboard of a front passenger seat, or disposed on both a dashboard of a driver seat and a dashboard of a front passenger seat. This is not limited in this application. It may be understood that, for a dashboard extending from the driver seat to the front passenger seat, that the display apparatus 101 is disposed on the dashboard of the driver seat or disposed on the dashboard of the front passenger seat means that the display apparatus 101 is mounted on a dashboard near the driver seat or near the front passenger seat.

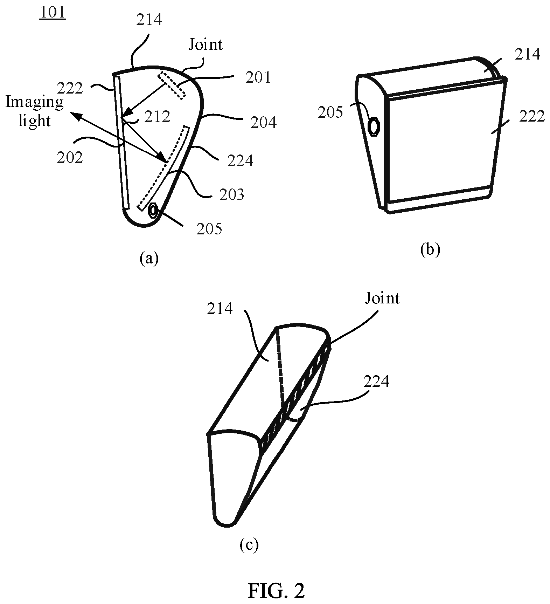

In some embodiments, FIG. 2 is a diagram of a display apparatus 101 applicable to an embodiment of this application. (a) in FIG. 2 is a perspective view of a side structure of the display apparatus 101, (b) in FIG. 2 is a main view of the display apparatus 101, and (c) in FIG. 2 is a diagram of the display apparatus 101 from another viewing angle. As shown in FIG. 2, the display apparatus 101 includes an image generation unit 201, a window unit 202, an image magnification unit 203, and a housing 204 (also referred to as a protective housing, an external housing, or the like). The window unit 202 includes a first surface 212 and a second surface 222, and the housing 204 includes a third surface 214 and a fourth surface 224. One end of the third surface 214 is connected to an upper edge of the window unit 202, the other end of the third surface 214 and one end of the fourth surface 224 are closely connected (that is, connected at a joint in FIG. 2), and the other end of the fourth surface 224 is connected to a lower edge of the window unit 202, so that the second surface 222 of the window unit 202, the third surface 214, and the fourth surface 224 form enclosed internal space, and the image generation unit 201 and the image magnification unit 203 are arranged in the internal space. Specifically, when the display apparatus 101 operates, the image generation unit 201 is configured to emit imaging light to the first surface 212 of the window unit 202. After being reflected on the first surface 212 of the window unit 202, the imaging light is transmitted to a surface of the image magnification unit 203. After being reflected by the image magnification unit 203, the imaging light reaches the first surface 212 again, and enters a human eye after being transmitted through the first surface 212 and the second surface 222, so that the human eye can view a virtual image located on an image plane.

It should be noted that, in the solution of this application, the third surface 214 and the fourth surface 224 may be two surfaces of the housing 204. In this case, the housing 204 is a complete housing, for example, a structural member that is integrally formed through an injection molding process. Alternatively, the third surface 214 and the fourth surface 224 are respectively surfaces of housing parts of the housing 204. In this case, the housing 204 may be split into one part corresponding to the third surface 214 and the other part corresponding to the fourth surface 224, in other words, the housing 204 is no longer a complete housing. When the third surface 214 and the fourth surface 224 are respectively the surfaces corresponding to the housing parts, that the third surface 214 is closely connected to the fourth surface 224 may mean that the part of the housing corresponding to the third surface 214 and the other part of the housing corresponding to the fourth surface 224 are closely connected, for example, bonded together through specific glue. In this case, there is no other connection structure between the part of the housing corresponding to the third surface 214 and the other part of the housing corresponding to the fourth surface 224. In other words, the joint in FIG. 2 only indicates a position at which the part of the housing corresponding to the third surface 214 is closely connected to the other part of the housing corresponding to the fourth surface 224, and may also be understood as a boundary between the third surface and the fourth surface. Alternatively, that the third surface 214 is closely connected to the fourth surface 224 may mean that the part of the housing corresponding to the third surface 214 is closely connected to the other part of the housing corresponding to the fourth surface 224 through another connection structure, for example, through a decorative strip or as another small housing part of the housing 204, to fasten the part of the housing corresponding to the third surface 214 and the other part of the housing corresponding to the fourth surface 224 together. In this case, the joint in FIG. 2 indicates the connection structure connecting the part of the housing corresponding to the third surface 214 and the other part of the housing corresponding to the fourth surface 224.

In this embodiment of this application, a status of the display apparatus 101 includes a stowed state and a display state. The first drive apparatus 103 is configured to adjust the display apparatus 101 from the stowed state to the display state, or adjust the display apparatus 101 from the display state to the stowed state.

Specifically, when the display apparatus 101 is in the stowed state, the second surface 222 of the window unit 202 is embedded into the dashboard 102, so that the third surface 214 forms a part of a knee protection panel of the dashboard 102, and the fourth surface 224 forms a part of a dashboard surface of the dashboard 102. For example, when the user does not use the display apparatus 101 to view an image, the user may control, by using an operating system, for example, a mobile phone application, or by operating a control button on the dashboard 102, the display apparatus 101 to be adjusted from the display state to the stowed state. Alternatively, when no human eye or user is detected within a long time, the display system 100 controls the first drive apparatus 103 (for example, controlled according to an instruction sent by a processing apparatus) to automatically adjust from the display state to the stowed state.

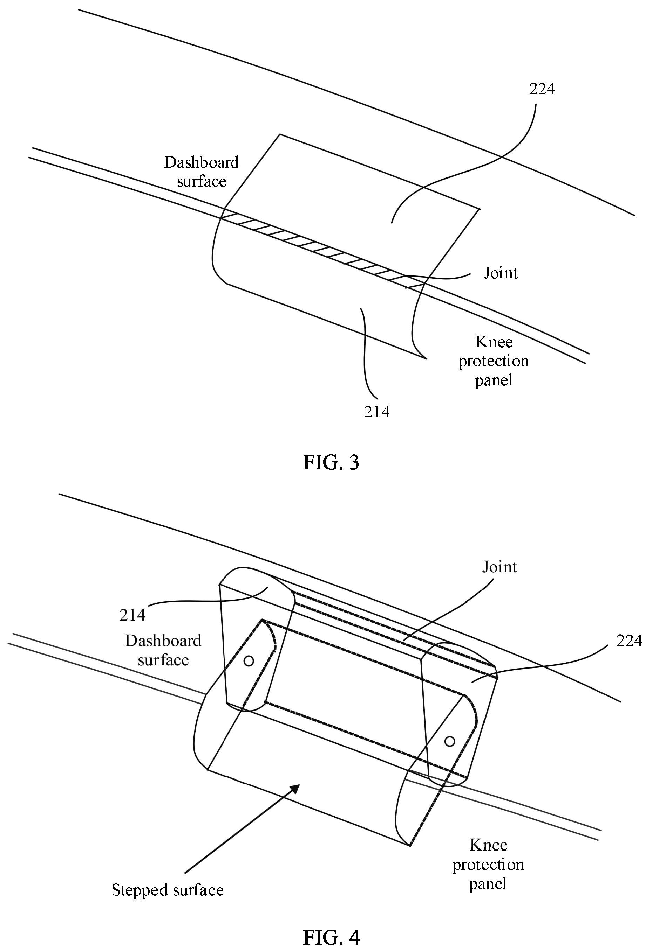

It may be understood that, when the display apparatus 101 is in the stowed state, in some embodiments, at least one part of the third surface 214 and the fourth surface 224 may not fully fit a surface of the corresponding dashboard 102. In other words, the third surface 214 may not fully fit the knee protection panel of the dashboard 102, or the fourth surface 224 may not fully fit the dashboard surface of the dashboard 102, or when the third surface 214 does not fully fit the knee protection panel of the dashboard 102, the fourth surface 224 does not fully fit the dashboard surface of the dashboard 102. In some other embodiments, it may be designed that when the display apparatus 101 is in the stowed state, the third surface 214 fully fits the knee protection panel of the dashboard 102, and the fourth surface 224 fully fits the dashboard surface of the dashboard 102. In this case, a radian of a joint between the third surface 214 and the fourth surface 224 is the same as a radian between the knee protection panel of the dashboard 102 and the dashboard surface of the dashboard 102, as shown in FIG. 3. In comparison with a case of incomplete fitting, when the display apparatus 101 is completely embedded, styling of the display apparatus 101 may be coupled with a design of the dashboard 102, so that perfect unification of styling in the vehicle can be implemented.

When the display apparatus 101 is in the display state, the third surface 214 is separated from the knee protection panel of the dashboard 102, and the fourth surface 224 is separated from the dashboard surface of the dashboard, so that the second surface 222 is opposite to the human eye. For example, when the user needs to use the display apparatus 101 to view an image, the user may control, by using the operating system, a control button, or the like, the display apparatus 101 to be adjusted from the stowed state to the display state. Alternatively, when the human eye or the user is detected (in this case, the user may not use the display apparatus), the display system 100 controls the first drive apparatus 103 to automatically adjust from the stowed state to the display state.

It may be understood that, because the display apparatus 101 occupies the internal space of the dashboard 102 when the display apparatus 101 is in the stowed state, when the display apparatus 101 is in the display state, the display apparatus 101 moves out of the dashboard 102, so that the dashboard surface of the dashboard 102 and a position used to stow the display apparatus 101 present a stepped surface, as shown in FIG. 4.

It should be noted that, in the solutions of this application, the stowed state and the display state are merely used to define a spatial status of the display apparatus 101, and should not be narrowly understood as that in the display state, an image is definitely provided for the user to view. In other words, even if the display apparatus 101 is in the stowed state, the display apparatus 101 may still continue to operate; or even if the display apparatus 101 is in the display state, the display apparatus 101 may not operate, and is only expanded from the dashboard and exposed in the cockpit.

In some embodiments, the first drive apparatus 103 may adjust the status of the display apparatus 101 based on a connection unit 205. In this case, the display apparatus 101 further includes the connection unit 205. Optionally, the connection unit 205 may be at least one of a rotating component (including but not limited to one or more rotating shafts, one or more rotating supports, one or more rotating gears, and the like) and a moving component (including but not limited to a guide rail, a lifting platform, and the like), and can adjust the status of the display apparatus 200 as a whole under adjustment of the first drive apparatus 103. For example, when the first drive apparatus 103 adjusts the display apparatus 101 from the stowed state to the display state, if the connection unit 205 is the rotating component, the display apparatus 101 rotates out from the dashboard 102 and stops after rotating to an appropriate angle. If the connection unit 205 is the rotating component and the moving component, the first drive apparatus 103 may first drive the moving component to enable the display apparatus 101 to move out of the dashboard (for example, slide out or lift up), and then drive the rotating component to enable the display apparatus 101 to rotate to an appropriate angle and stop.

Optionally, the first drive apparatus 103 is connected to the connection unit 205 through a damping structure. The damping structure may include but is not limited to a hinge, a damper, a gear, and the like. Alternatively, optionally, the first drive apparatus 103 is magnetically connected to the connection unit 205. Optionally, the first drive apparatus 103 may be an automatic apparatus (for example, electric or magnetic) or a manual apparatus. For example, when the first drive apparatus 103 is connected to the connection unit 205 through the damping structure, and the first drive apparatus 103 is the automatic apparatus, the first drive apparatus 103 may be a motor, and the motor drives the connection unit 205 to operate, to adjust the status of the display apparatus 101. Alternatively, the first drive apparatus 103 may be a permanent magnet, and the permanent magnet drives the connection unit 205 (for example, a magnetic coil) to operate, to adjust the status of the display apparatus 101. Alternatively, when the first drive apparatus 103 is the manual apparatus, the first drive apparatus 103 may adjust the status of the display apparatus 101 by operating the connection unit 205 by the user.

When the first drive apparatus 103 is the automatic apparatus, the automatic apparatus may be arranged in internal space of the display apparatus 101, or may be arranged outside the display apparatus 101, for example, in the dashboard, or on an external surface of the housing of the display apparatus 101. This is not limited in this application.

It should be noted that, in some embodiments, the display system 100 provided in this application may not include the first drive apparatus 103. For example, the user manually presses the housing of the display apparatus 101 to rotate the display apparatus 101. For example, when the user needs to adjust the display apparatus 103 from the stowed state to the display state, the user presses the fourth surface 224 downward. In this case, downward pressing force drives the connection unit 205 to rotate, so that the third surface 214 and the window unit 202 are tilted up. Then, the display apparatus 101 is fastened to a fastening apparatus like a slot by using both hands or one hand, for use by the user.

Alternatively, in some other embodiments, there is no obvious connection relationship between the first drive apparatus 103 and the connection unit 205. For example, when the connection unit 205 is the rotating component, the first drive apparatus 103 may be a rotating handle or a rotating gear of the connection unit 205. In this case, it may be regarded as the first drive apparatus 103 directly driving the display apparatus 101 to rotate, or it may be regarded as the connection unit 205 directly driving the display apparatus 101 to rotate.

Optionally, the image generation unit 201 may be a liquid crystal display (liquid crystal display, LCD), a liquid crystal on silicon (liquid crystal on silicon, LCOS) display, an organic light-emitting diode (organic light-emitting diode, OLED) display, a micro light-emitting diode (Micro-LED) display, a display using a mini-LED display technology, a digital light processing (digital light processing, DLP) display, a micro-electro-mechanical system (micro-electro-mechanical system, MEMS) display, or the like. This is not limited in this application.

Optionally, the image magnification unit 203 is a freeform mirror, or a non-freeform mirror, for example, a spherical mirror.

It should be noted that FIG. 2 is merely an example of the display apparatus applicable to an embodiment of the display system in this application. In other words, a structure of the display apparatus applicable to embodiments of this application is not limited to the structure shown in FIG. 2. In some other embodiments, the image generation unit 201 in the display apparatus 200 may be further arranged at another position, for example, arranged behind the image magnification unit 203. In this case, the imaging light emitted by the image generation unit 201 is incident on a surface of the window unit 202 after being transmitted through the image magnification unit 203, then is incident to the image magnification unit 203 after being reflected by the window unit 202, and is reflected by the image magnification unit 203 again to the window unit 202 and transmitted through the window unit 202, to enter the human eye.

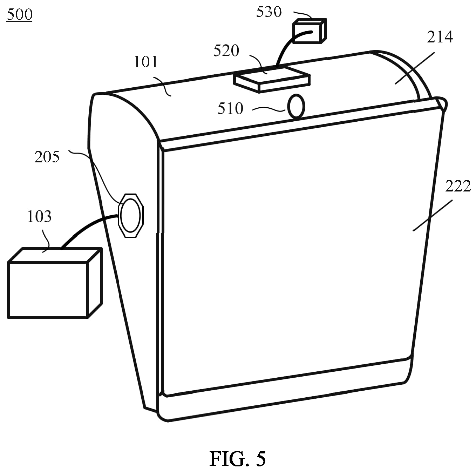

FIG. 5 is a diagram of a structure of a second display system 500 according to an embodiment of this application. It should be noted that the display system 500 shown in FIG. 5 is described by using the display apparatus 101 shown in FIG. 2 as an example. As shown in FIG. 5, the display system 500 includes a display apparatus 101, a first drive apparatus 103, a first obtaining apparatus 510, and a processing apparatus 520. The first obtaining apparatus 510 is connected to the processing apparatus 520, and the processing apparatus 520 is connected to the first drive apparatus 103. Specifically, the first obtaining apparatus 510 is configured to: when the display apparatus 101 is at a first angle, obtain one or more first images including a human eye of a user, and send the one or more first images to the processing apparatus 520. The processing apparatus 520 generates a first adjustment amount based on the received one or more first images, and sends the first adjustment amount to the first drive apparatus 103. For descriptions of the display apparatus 101 and the first drive apparatus 103, refer to related parts in FIG. 2. Details are not described herein again.

Optionally, the first obtaining apparatus 510 may be a sensor in a cockpit. For example, the first obtaining apparatus 510 may be an image sensor and the like arranged on the top of the cockpit or arranged on a housing of the display apparatus 101. When the first obtaining apparatus 510 is the image sensor arranged on the top of the cockpit, the first obtaining apparatus 510 may be arranged right in front of the human eye of the user, and is configured to photograph one or more first images including a front view of the human eye; or the first obtaining apparatus 510 may be arranged in a direction of a side face of the user, and is configured to photograph one or more first images including a side view of the human eye. When the first obtaining apparatus 510 is the image sensor arranged on the housing of the display apparatus 101, the first obtaining apparatus 510 may be arranged on the housing (as shown in FIG. 5) above the window unit 202, and is configured to photograph one or more first images including a front view of the human eye.

Optionally, the processing apparatus 520 may be a processor arranged in the cockpit or arranged on the housing of the display apparatus 101, or the like. When the processing apparatus 520 is the processor arranged in the cockpit, the processor may be a central processing unit that controls a cockpit system. When the processing apparatus 520 is located on the housing of the display apparatus 101, the processing apparatus 520 may be arranged beside the first obtaining apparatus 510 located on the housing, as shown in FIG. 5.

It should be noted that a connection manner between the processing apparatus 520 and the first obtaining apparatus 510 and a connection manner between the processing apparatus 520 and the first drive apparatus 103 are not limited in this application. The connections may be established through wired links, may be established through wireless links, may be direct connections, or may be indirect connections through other network devices, controllers, or the like, so that the processing apparatus 520 exchanges information with the first obtaining apparatus 510 or the first drive apparatus 103 through a connected link.

In some embodiments, when the first obtaining apparatus 510 obtains one first image, the processing apparatus 520 determines a first human-eye position and an ideal human-eye position based on the received first image, and generates the first adjustment amount based on the first human-eye position and the ideal human-eye position. The first human-eye position is a distance of the human eye in a vertical direction and/or a horizontal direction in the first image relative to an edge of the image.

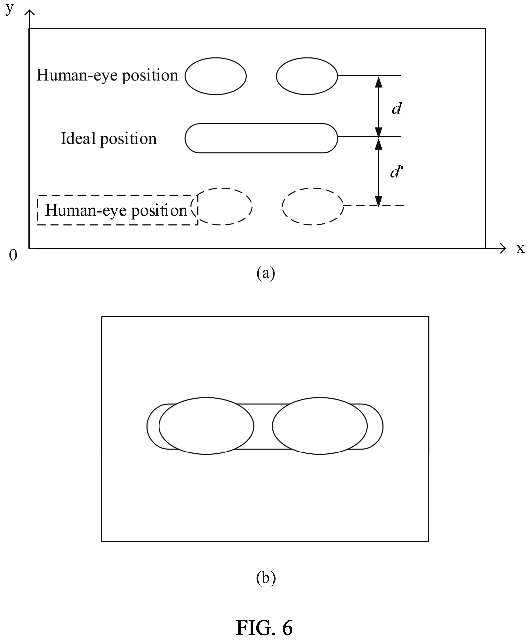

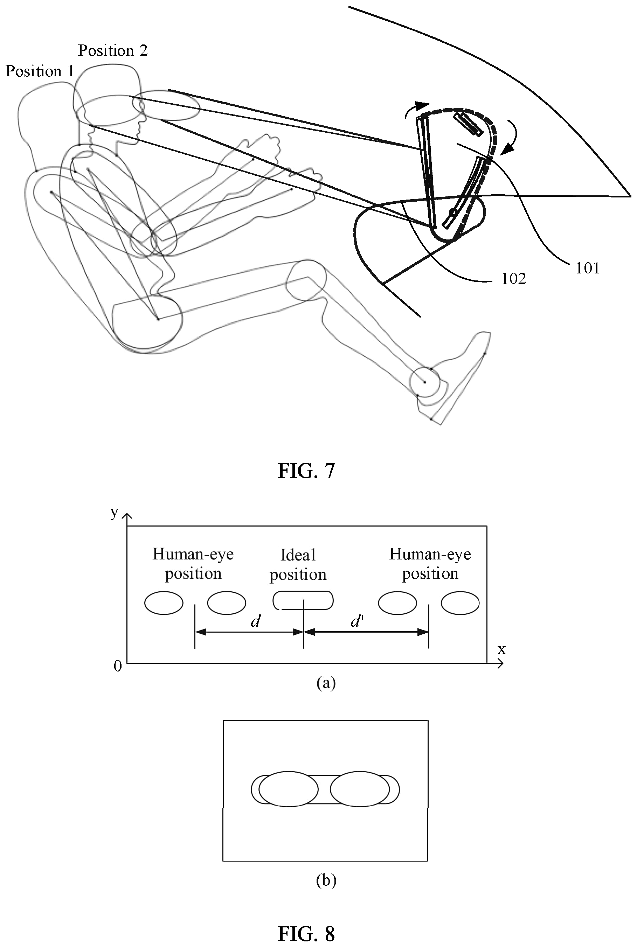

Specifically, when the first human-eye position is the distance in the vertical direction relative to the edge of the first image, (a) in FIG. 6 shows a diagram in which the first human-eye position in the first image is located above the ideal human-eye position and the first human-eye position in the first image is located below the ideal human-eye position. The vertical direction is a y direction shown in FIG. 6. In this case, the processing apparatus 520 may determine a distance *d* or a distance *d'* (namely, a difference between a y-coordinate of the first human-eye position and a y-coordinate of the ideal human-eye position) between the first human-eye position and the ideal human-eye position in the vertical direction by using an image processing algorithm, generate a first adjustment amount Δθ of an angle of the display apparatus 101 based on the distance d or the distance *d'*, and send the first adjustment amount Δθ to the first drive apparatus 103. The first drive apparatus 103 drives, based on the first adjustment amount Δθ, the connection unit 205 to rotate by Δθ, to complete angle adjustment of the display apparatus 101, so that a human-eye position that is in the image and that is obtained after the angle adjustment basically coincides with the ideal human-eye position, as shown in (b) in FIG. 6. When the first human-eye position is the distance in the vertical direction relative to the edge of the first image, if the ideal human-eye position is used as a coordinate axis with a distance of 0, when the first human-eye position is above the ideal human-eye position, the distance *d* may be set to a positive value, and the display apparatus 101 implements "head-up" effect during the angle adjustment. When the first human-eye position is below the ideal human-eye position, the distance *d'* is set to a negative value, and the display apparatus 101 implements "head-down" effect during the angle adjustment. For example, as shown in FIG. 7, after the first human-eye position is adjusted from a position 1 to a position 2, because the first human-eye position is upward relative to the ideal human-eye position, the display apparatus 101 implements head-up effect.

When the first human-eye position is the distance in the horizontal direction relative to the edge of the first image, (a) in FIG. 8 shows a diagram in which the first human-eye position is located on a left side of the ideal human-eye position and the first human-eye position is located on a right side of the ideal human-eye position. The horizontal direction is an x direction shown in FIG. 8. In this case, the processing apparatus 520 may determine a distance *d* or a distance *d'* (namely, a difference between an x-coordinate of the first human-eye position and an x-coordinate of the ideal human-eye position) between the first human-eye position and the ideal human-eye position in the horizontal direction by using an image processing algorithm, generate a first adjustment amount Δθ of an angle of the display apparatus 101 through calculation based on the distance d, and send the first adjustment amount Δθ to the first drive apparatus 103. The first drive apparatus 103 drives, based on the first adjustment amount Δθ, the connection unit 205 to rotate by Δθ, to complete angle adjustment of the display apparatus 101, so that a human-eye position that is in the image and that is obtained after the angle adjustment basically coincides with the ideal human-eye position, as shown in (b) in FIG. 8. When the first human-eye position is the distance in the horizontal direction relative to the edge of the first image, the left side of the ideal human-eye position may be set to negative, and the left side of the ideal human-eye position may be set to positive. To be specific, when the first human-eye position is on the left side of the ideal human-eye position, the distance *d* is a negative value, and the display apparatus 101 implements leftward "head shaking" effect during the angle adjustment. When the first human-eye position is on the right side of the ideal human-eye position, the distance *d'* is a positive value, and the display apparatus 101 implements rightward "head shaking" effect during the angle adjustment.

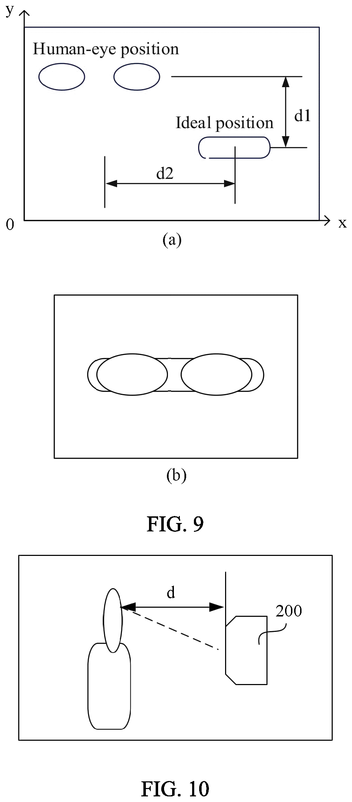

When the first human-eye position in the first image obtained by the first obtaining apparatus 510 changes in both the vertical direction and the horizontal direction relative to the ideal human-eye position, for example, as shown in (a) in FIG. 9, the first human-eye position is located in an upper left corner of the ideal human-eye position, the processing apparatus 520 may determine a distance d1 in the vertical direction and a distance d2 in the horizontal direction between the first human-eye position and the ideal human-eye position by using an image processing algorithm, generate a first adjustment amount Δθ of an angle of the display apparatus 101 through calculation based on the distances d1 and d2, and send the first adjustment amount Δθ to the first drive apparatus 103. The first drive apparatus 103 drives, based on the first adjustment amount Δθ, the connection unit 205 to rotate by Δθ, to complete angle adjustment of the display apparatus 101, so that a human-eye position that is in the image and that is obtained after the angle adjustment basically coincides with the ideal human-eye position, as shown in (b) in FIG. 9.

Generally, in an actual angle adjustment process, an error exists in a rotation process of the connection unit 205, a calculation process of the processing apparatus 520, or a process of obtaining the first image by the first obtaining apparatus 510. Therefore, that the human-eye position that is in the image and that is obtained after the angle adjustment basically coincides with the ideal human-eye position described in this application means that an error of a distance (including at least one of the vertical distance and the horizontal distance) between the human-eye position after the angle adjustment and the ideal human-eye position is within an allowable error range.

It may be understood that, in FIG. 6, because coordinates of the first human-eye position relative to the ideal human-eye position change only in the vertical direction, the first human-eye position obtained by the processing apparatus 520 is a coordinate value of the human eye in the vertical direction in the first image relative to the edge of the first image. When the first image is a rectangle, the vertical direction may be understood as a direction of a short side of the rectangle. In FIG. 8, coordinates of the first human-eye position relative to the ideal human-eye position change only in the horizontal direction. Therefore, the first human-eye position obtained by the processing apparatus 520 is a coordinate value of the human eye in the horizontal direction in the first image relative to the edge of the first image. When the first image is a rectangle, the horizontal direction may be understood as a direction along a long side of the rectangle. In FIG. 9, coordinates of the first human-eye position relative to the ideal human-eye position change in both the vertical direction and the horizontal direction. Therefore, the first human-eye position obtained by the processing apparatus 520 is determined based on coordinate values of the human eye in both the horizontal direction and the vertical direction in the first image relative to the edge of the first image. In addition, in the solution of this application, the ideal human-eye position is a central position of the first image. To be specific, distances from the ideal human-eye position to upper and lower edges of the first image are the same, and distances from the ideal human-eye position to left and right edges of the first image are the same.

It may be further understood that, in FIG. 6, FIG. 8, and FIG. 9, the lower edge of the first image is used as an axis with y=0, and the left edge of the first image is used as an axis with x=0. However, this application is not limited thereto. In other words, in the descriptions of this application, an example in which the long side of the rectangle is used as the horizontal direction and the short side of the rectangular image is used as the vertical direction is used for description. The horizontal direction and the vertical direction are merely for ease of description, and may also be referred to as a first direction and a second direction. The first direction and the second direction are perpendicular to each other. Therefore, positioning of the coordinate axis is not limited in this application to be strictly the same as that in the foregoing example diagram, provided that the first human-eye position and the ideal human-eye position in the first image are obtained through calculation based on same image coordinates.

It should be noted that, in embodiments of this application, when the image (including the foregoing one or more first images, and the following one or more second images and one or more third images) obtained by the first obtaining apparatus 510 is a front view of the user, for example, when the image includes two eyes of the user, the human-eye position (including the foregoing first human-eye position and the following second human-eye position) may be understood as a midpoint of an interocular line, a midpoint between eyebrows of the user, or the like. This is not limited in this application. When the image (including the foregoing one or more first images, and the following one or more second images and one or more third images) obtained by the first obtaining apparatus 510 is a side view of the user, the human-eye position may be understood as a distance of the human eye in the vertical direction and/or the horizontal direction in the side view relative to the edge of the image. It may be understood that, in FIG. 6, FIG. 8, and FIG. 9, an example in which the front view of the user is obtained by the first obtaining apparatus 510 is used for description.

In some other embodiments, when the first obtaining apparatus 510 obtains a plurality of first images, the processing apparatus 520 determines a second human-eye position and an ideal human-eye position based on the plurality of received first images, and generates a first adjustment amount based on the second human-eye position and the ideal human-eye position. The second human-eye position is determined based on a distance of a human eye in a vertical direction and/or a horizontal direction in each of the plurality of first images relative to an edge of a corresponding image. Optionally, the second human-eye position may be an average value, a variance, a mean square error, a median, or the like of distances of human eyes in the vertical direction and/or the horizontal direction in the plurality of first images relative to edges of the corresponding images. This is not limited in this application. For example, when the first obtaining apparatus 510 sends 10 first images to the processing apparatus 520, and the second human-eye position is represented by using an average value, after obtaining a human-eye position in each first image through calculation, the processing apparatus 520 obtains the second human-eye position by calculating an average value of the 10 human-eye positions of the 10 first images.

It may be understood that the human-eye position in each of the plurality of first images may be, as shown in FIG. 6, a change in the vertical direction relative to the ideal human-eye position, or, as shown in FIG. 8, a change in the horizontal direction relative to the ideal human-eye position, or, as shown in FIG. 9, a change in the vertical direction and the horizontal direction relative to the ideal human-eye position. Details are not described herein again. In addition, when differences between the human-eye position in the plurality of first images and the ideal human-eye position are obtained through calculation, the differences are always obtained through calculation by subtracting the ideal human-eye position from the actual human-eye positions in the first images, or are always obtained through calculation by subtracting the actual human-eye positions from the ideal human-eye position.

In addition, because the display system provided in this application is mounted on the dashboard of the transportation means, when the transportation means is traveling, a bumpy condition usually exists, for example, when the vehicle is traveling on a road with a poor road condition, or an airplane is passing through an air flow layer. To prevent the display apparatus 101 from frequently adjusting the angle, and causing glare and fatigue for the user during viewing, in some other embodiments, only when the processing apparatus 520 determines that a distance between the second human-eye position and the ideal human-eye position is greater than a first threshold and determines that the second human-eye position is a human-eye position actively adjusted by the user, the display system triggers an angle adjustment procedure and the processing apparatus 520 generates the first adjustment amount Δθ or sends the first adjustment amount Δθ to the first drive apparatus 103. The processing apparatus 520 determines that the distance between the second human-eye position and the ideal human-eye position is greater than the first threshold, that is, a difference between the second human-eye position and the ideal human-eye position is greater than the first threshold. That the processing apparatus 520 determines that the second human-eye position is the human-eye position actively adjusted by the user means that the plurality of first images are obtained in a stable state. The stable state is defined as that the plurality of first images are obtained within first preset time, and a distance of the human eye in a vertical direction and/or a horizontal direction in each first image relative to an edge of a corresponding image is within a first preset range. In other words, the human-eye positions in the plurality of first images obtained by the first obtaining apparatus within the first preset time are within the first preset range. It should be noted that the first preset range is a preset change range (for example, a change value of a coordinate) of the human-eye position within the first preset time. For example, it may be understood as that in the plurality of first images obtained in a time sequence, a change of a human-eye position in a later obtained first image in two adjacent first images relative to a human-eye position in a previous first image is within the first preset range, or it may be understood as that a difference between a maximum value and a minimum value of the human-eye positions in the plurality of first images is within the first preset range. This is not limited in this application.

Specifically, after the first obtaining apparatus 510 sends the first images obtained in real time to the processing apparatus 520, the processing apparatus 520 first determines that the human-eye positions corresponding to the plurality of first images obtained within the first preset time are within the first preset range, and then the processing apparatus 520 determines that the human-eye positions in the first preset time period are positions actively adjusted by the user. For example, the human-eye position changes after the user changes a sitting posture, instead of passive shaking caused by the cockpit. If the processing apparatus 520 continues to determine that the generated difference between the second human-eye position and the ideal human-eye position is greater than the first threshold, the processing apparatus 520 generates the first adjustment amount, to trigger angle adjustment of the display apparatus 101. It may be understood that, when the second human-eye position obtained in the stable state and the ideal human-eye position are less than the first threshold, the display apparatus 101 does not perform adjustment. In this case, the processing apparatus may discard the obtained second human-eye position through calculation, and trigger angle adjustment of the display apparatus 101 only when an obtained difference between a second human-eye position in a next stable state and an ideal human-eye position through calculation is greater than or equal to the first threshold. The first threshold is set, so that the angle adjustment of the display apparatus 101 may not be excessively frequent, thereby ensuring use experience of the user.

It should be noted that, in the solution of this application, the first preset time and the first preset range may be fixed values or may be variable values. Specifically, when the first preset time is a fixed value, the first preset time may be preset in the display system at delivery, or may be generated by the processing apparatus 520 based on a use habit of the user in a period of time by using an algorithm such as machine learning or big data. This is not limited in this application. For example, the first preset time may be 0.8s to 3s. When the first preset time is a variable value, the first preset time may be flexibly adjusted by setting an environment in which the cockpit of the display apparatus 101 is located, and the environment in which the cockpit is located may include but is not limited to brightness of the cockpit and a cockpit attitude (for example, a road condition in which the vehicle travels and vehicle navigation information). For example, when ambient light in the cockpit is dim, accuracy of the second human-eye position generated by the processing apparatus 520 based on the plurality of first images is poor. In this case, the first preset time may be set to long duration, to avoid an error in calculation. For another example, when the vehicle travels on a flat highway, because a possibility of the vehicle bumping is low, or frequency of adjusting the sitting posture by the user is low, or the processing apparatus 520 learns, based on navigation information, that the vehicle needs to travel on the highway for a long time in the future, or the like, the processing apparatus 520 may appropriately set the first preset time to the long duration. When the first preset range is a fixed value, the first preset range may be preset in the processing apparatus 520 at delivery of the display system, or may be generated by the processing apparatus 520 based on the use habit of the user by using the algorithm such as machine learning or big data. This is not limited in this application. For example, the first preset range may be 5 cm to 7 cm. When the first preset range is a variable value, the first preset time may be flexibly adjusted based on the environment in which the cockpit is located, or the like. For example, when the vehicle travels on the flat highway, the first preset range may be adjusted to a large value, so that posture adjustment of the user is easy to distinguish.

It should be further noted that, in some scenarios, the processing apparatus 520 may further stop calculating the first adjustment amount Δθ for a period of time. It may also be considered as that even if the processing apparatus 520 obtains the first adjustment amount Δθ through calculation, the processing apparatus 520 does not send the first adjustment amount Δθ to the adjustment apparatus. Alternatively, it may be considered as that the processing apparatus 520 discards data of a plurality of first images received in the period of time. For example, for an aircraft cockpit, the processing apparatus 520 may learn of a flight environment in advance, for example, presence of strong airflow over a specific flight distance. In this case, the processing apparatus 520 may obtain, through calculation based on a flight speed of an aircraft and a length of the airflow, time taken to pass through the airflow, and stop adjusting the angle of the display apparatus 101 within the time.

Based on the foregoing solution, the second human-eye position is generated based on the plurality of first images, so that accuracy of the human-eye position can be improved, thereby ensuring accuracy of the angle adjustment of the display apparatus. When the second human-eye position is generated based on the plurality of first images in the stable state, and the first threshold is used to determine whether to perform angle adjustment, a shaking situation of the display system of the cockpit may be filtered, and angle adjustment of the display apparatus 101 is performed under a trigger condition (that is, the first threshold is used as the trigger condition), thereby further ensuring reliability of the angle adjustment and further improving user experience.

To further improve reliability of the display system 500, optionally, the display system 500 further includes a second obtaining apparatus 530. The second obtaining apparatus 530 is configured to obtain information about an environment in which the display apparatus 101 is located, for example, a cockpit attitude (including but not limited to a road condition in which the vehicle travels and navigation information of the vehicle), brightness of the cockpit, and a temperature of the display apparatus 101, so that the processing apparatus 520 can further determine a confidence level of the obtained second human-eye position based on the environment information. Specifically, when the processing apparatus 520 determines, based on the environment information, that the confidence level of the generated second human-eye position is low, the processing apparatus 520 discards the current second human-eye position, and continues to obtain, through calculation based on the received plurality of first images, a second human-eye position with a high confidence level. For example, when the processing apparatus 520 determines the confidence level of the second human-eye position based on the cockpit attitude, the second obtaining apparatus 530 may be a lidar device configured to detect a road condition, a navigation device configured to navigate a route, or the like. In this case, the processing apparatus 530 may generate road condition information corresponding to the plurality of first images, and calculate a ratio of actual road condition information to ideal road condition information, to obtain a road condition confidence level coefficient. When the road condition confidence level coefficient is greater than or equal to 0.5, the processing apparatus 520 considers that the second human-eye position corresponding to the plurality of first images is reliable. For example, when the processing apparatus 520 determines the confidence level of the second human-eye position based on the brightness of the cockpit, the second obtaining apparatus 530 may be a brightness detector. In this case, the processing apparatus 530 may generate brightness information corresponding to the plurality of first images, and calculate a ratio of the brightness information to ideal brightness information to obtain a brightness confidence level coefficient. When the brightness confidence level coefficient is greater than or equal to 0.5, the processing apparatus 520 considers that the second human-eye position corresponding to the plurality of first images is reliable. For example, when the processing apparatus 520 determines the confidence level of the second human-eye position based on the temperature of the display apparatus 101, the second obtaining apparatus 530 may be a temperature detector. In this case, the processing apparatus 530 may determine, based on the temperature that is of the display apparatus 101 and that is obtained when the plurality of first images are obtained, whether the second human-eye position corresponding to the plurality of first images is reliable. It may be understood that the foregoing environment information is merely an example rather than a limitation, and this application is not limited thereto. Other information that is of the display apparatus 101 and that affects the confidence level of the second human-eye position or other information of the cockpit falls within the protection scope of this application.

In addition, the processing apparatus 520 may further determine the confidence level based on information about the first images obtained by the first obtaining apparatus 510. In this case, the display system 500 may not include the second obtaining apparatus 530. For example, the processing apparatus 530 may generate color saturation information corresponding to the plurality of first images, and calculate a ratio of the color saturation information to ideal color saturation information, to obtain a color confidence level coefficient. When the color confidence level coefficient is greater than or equal to 0.5, the processing apparatus 520 considers that the second human-eye position corresponding to the plurality of first images is reliable. Alternatively, the processing apparatus 530 may further determine, through image processing, that human-eye positions (including the first human-eye position and the second human-eye position) in the plurality of first images are unreliable. For example, the processing apparatus 530 determines that the generated human-eye positions are inaccurate because the user wears occluding objects such as sunglasses in the plurality of first images.

Based on the foregoing solution, the processing apparatus determines the confidence level of the second human-eye position, so that the reliability of the display system can be further improved, thereby improving user experience.

It may be understood that, in some scenarios, even if the display apparatus 101 has adjusted the angle perfectly, the user may still not be able to view a complete virtual image. For example, when the user is close to the display apparatus 101, or the user is excessively tall or significantly offset, the angle adjustment can only enable the user to view a partial image in an eye box of the display apparatus 101. In this case, the display system 500 provided in this application can further adjust image framing. Specifically, the first obtaining apparatus 510 is further configured to: when the display apparatus 101 is at the second angle, obtain one or more second images including the human eye of the user, and send the one or more second images to the processing apparatus 520. The processing apparatus 520 further generates a second adjustment amount based on the one or more second images, and sends the second adjustment amount to the image generation unit 201. The image generation unit 201 generates an image of a corresponding size based on the second adjustment amount, and emits second imaging light to the window unit 202. The window unit 202 reflects the second imaging light that is from the image generation unit 201 to the image magnification unit 203, and transmits the second imaging light that is from the image magnification unit 203, so that the user views, at the second angle through the window unit 202, a complete virtual image formed by the second imaging light. The image magnification unit 203 is configured to reflect the second imaging light that is from the window unit 202 to the window unit 202.

In some embodiments, when the first obtaining apparatus 510 obtains one second image, the processing apparatus 520 determines a first human-eye depth based on the received second image, and generates a second adjustment amount based on the first human-eye depth and a second human-eye depth. The first human-eye depth is a distance that is between the human eye and the window unit 202 and that is obtained when the second image is obtained, the second human-eye depth is a human-eye depth corresponding to a third image, the second human-eye depth is a distance that is between the human eye and the window unit 202 and that is obtained when the third image is obtained, and obtaining time of the third image is before obtaining time of the second image. Alternatively, the second human-eye depth is a preset human-eye depth.

It may be understood that different human-eye depths correspond to different image framing sizes, or different human-eye depth ranges correspond to different image framing sizes. Therefore, after determining the first human-eye depth, the processing apparatus 520 may determine, based on a value of the first human-eye depth or a range of the first human-eye depth, a first image framing size corresponding to the first human-eye depth, determine a second image framing size corresponding to the second human-eye depth, generate the second adjustment amount by comparing the first image framing size with the second image framing size, and send the second adjustment amount to the image generation unit 201, so that the image generation unit 201 emits the second imaging light corresponding to the second image framing size.

It should be noted that different image framing sizes corresponding to different human-eye depths may be image framing sizes of the virtual image or image framing sizes in the image generation unit 201. This is not limited in this application.

In addition, the preset human-eye depth may be set before delivery of the display system of the cockpit, or may be a human-eye depth corresponding to image framing adjusted by the user based on a use habit, or may be a human-eye depth learned by the processing apparatus 520 based on the use habit of the user, or the like. This is not limited in this application.

In some other embodiments, when the first obtaining apparatus 510 obtains a plurality of second images, the processing apparatus 520 determines a third human-eye depth based on the plurality of received second images, and generates a second adjustment amount based on the third human-eye depth and a fourth human-eye depth. The third human-eye depth is a distance that is between the human eye and the window unit 202 and that is obtained when the plurality of second images are obtained, the fourth human-eye depth is a human-eye depth corresponding to a plurality of third images, the fourth human-eye depth is a distance that is between the human eye and the window unit 202 and that is obtained when the plurality of third images are obtained, and obtaining time of the plurality of third images is before obtaining time of the plurality of second images. Alternatively, the fourth human-eye depth is a preset human-eye depth.

It should be noted that the third human-eye depth may be an average value, a variance, a mean square error, a median, or the like of distances that are between human eyes and the window unit 202 and that are obtained when all second images in the plurality of second images are obtained. This is not limited in this application. For example, when the first obtaining apparatus 510 sends 10 second images to the processing apparatus 520, and the third human-eye depth is represented by using an average value, after obtaining a human-eye depth through calculation when each second image is obtained, the processing apparatus 520 obtains the third human-eye depth by calculating an average value of 10 human-eye depths of the 10 second images.

It should be noted that, in embodiments of this application, the human-eye depth (including the first human-eye depth to the fourth human-eye depth in the specification) is a distance between a plane on which the human eye is located and a plane on which the window unit 202 is located. When the human eye in the obtained one or more images is a front view, because the one or more images have depth information, the human-eye depth may be determined from the depth information. When the human eye in the obtained one or more images is a side view, the human-eye depth in the one or more images may be obtained through conversion based on a distance d between the human eye and the window unit 202 in the image. For example, as shown in FIG. 10, the image is a side view of a human eye, and a human-eye depth may be determined based on a distance between a plane on which the human eye is located in the image and a plane on which the window unit 202 is located.

Similarly, to avoid unnecessary image framing adjustment caused by shaking of the cockpit, in some other embodiments, when the processing apparatus 520 determines that a distance between the third human-eye depth and the fourth human-eye depth is greater than a second threshold, that is, a difference between the third human-eye depth and the fourth human-eye depth is greater than the second threshold, the processing apparatus 520 generates the second adjustment amount through calculation based on the third human-eye depth and the fourth human-eye depth. The plurality of second images and the plurality of third images are obtained in the stable state. In other words, the plurality of second images and the plurality of third images are obtained within the first preset time. In addition, a plurality of human-eye depths corresponding to the plurality of second images are within a second preset range, and a plurality of human-eye depths corresponding to the plurality of third images are within the second preset range. For example, that the plurality of human-eye depths corresponding to the plurality of second images are within the second preset range may be understood as that a change of a human-eye depth in a later obtained second image in two adjacent second images relative to a human-eye depth in a previous second image is within the second preset range, or may be understood as that a difference between a maximum value and a minimum value of the human-eye depths in the plurality of second images is within the second preset range. This is not limited in this application. Similarly, that the plurality of human-eye depths corresponding to the plurality of third images are within the second preset range may be understood as that a change of a human-eye depth in a later obtained third image in two adjacent third images relative to a human-eye depth in a previous third image is within the second preset range, or may be understood as that a difference between a maximum value and a minimum value of the human-eye depths in the plurality of third images is within the second preset range. This is not limited in this application.

Specifically, after the first obtaining apparatus 510 sends the second images obtained in real time to the processing apparatus 520, the processing apparatus 520 first determines that changes of the plurality of human-eye depths in the plurality of second images obtained within the first preset time are within the second preset range, and the processing apparatus 520 considers that the human-eye depths in the first preset time period are actively adjusted by the user. For example, the human-eye depth changes after the user changes a sitting posture, instead of passive shaking caused by the cockpit. In this case, the processing apparatus 520 generates the third human-eye depth based on the plurality of human-eye depths. If the processing apparatus 520 continues to determine that the difference between the generated third human-eye depth and the fourth human-eye depth is greater than the second threshold, the processing apparatus 520 generates the second adjustment amount, and triggers an image framing change of the display apparatus 101. In addition, the fourth human-eye depth is saved for next time of adjustment. It may be understood that, when the difference between the third human-eye depth and the fourth human-eye depth that are obtained in the stable state is less than the second threshold, the display apparatus 101 does not perform adjustment. In this case, the processing apparatus may discard the obtained third human-eye depth through calculation, and trigger image framing adjustment of the display apparatus 101 only when an obtained difference between a third human-eye depth and a fourth human-eye depth in a next stable state through calculation meets the second threshold.

Similarly, the second preset range may be a fixed value or a variable value. For setting of the second preset range, refer to the setting of the first preset range. Details are not described herein again.

In addition, the processing apparatus 520 also stops calculating the second adjustment amount for a period of time based on the environment in which the cockpit is located, and the like. For details, refer to descriptions in the foregoing related part. Details are not described herein again.

To further improve reliability of the display system 500, the display system 500 may determine, based on the information that is about the environment in which the display apparatus 101 is located and that is obtained by the second obtaining apparatus 530, or the information that is about the plurality of second images and that is obtained by the first obtaining apparatus 510, a confidence level of the obtained third human-eye depth. This process is the same as the process of determining the confidence level of the second human-eye position. Details are not described herein again.

It may be understood that angle adjustment of the display apparatus 101 is performed based on the one or more first images obtained by the first obtaining apparatus 510, and image framing adjustment is performed based on the one or more second images obtained by the first obtaining apparatus 510. Because the second image is obtained by the display apparatus at the second angle, in other words, image framing adjustment may further improve user experience based on the angle adjustment. Certainly, in some other embodiments, the display system 500 may first perform image framing adjustment, and then perform angle adjustment. In this case, the display apparatus may use one or more same images.

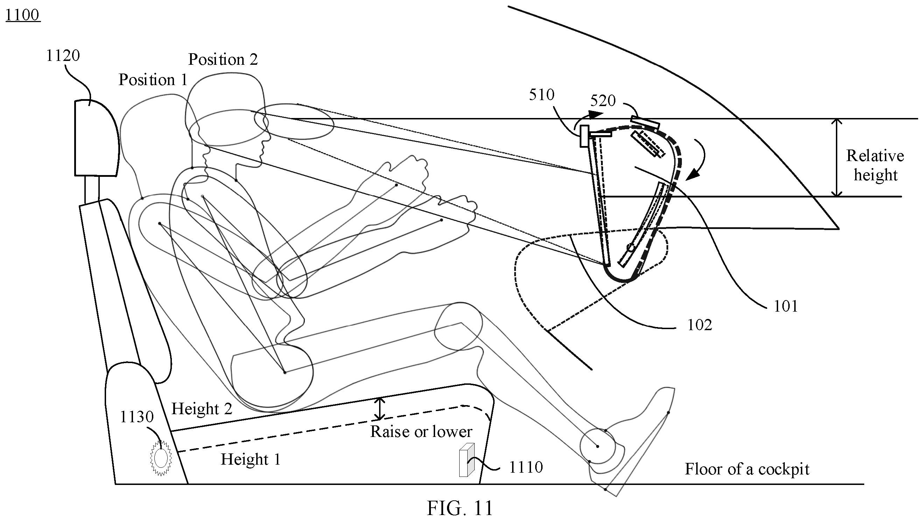

It may be understood that the foregoing embodiments describe adjustment of the display apparatus 101, including angle adjustment and image framing adjustment. In some embodiments, the seat taken by the user may be further adjusted, to further improve performance of the display system and enrich usage scenarios of the display system. FIG. 11 is a diagram of a third display system 1100 according to an embodiment of this application. As shown in FIG. 11, the display system 1100 includes a seat 1120, a display apparatus 101, a first obtaining apparatus 510, a processing apparatus 520, a third obtaining apparatus 1110, and a second drive apparatus 1130. A user sits in the seat 1120, the second drive apparatus 1130 is connected to the seat 1120, and the second drive apparatus 1130 is connected to the processing apparatus 520. The third obtaining apparatus 1110 is configured to obtain user information, and send the user information to the processing apparatus 520. The processing apparatus 520 is configured to: generate a third adjustment amount based on the user information and a relative height between a height of the display apparatus 101 and a height of a human eye, and send the third adjustment amount to the second drive apparatus 1130. The height of the display apparatus 101 is a height of a center of a window unit 202 relative to a floor of a cockpit, and the height of the human eye is a height of the human eye relative to the floor of the cockpit. The relative height between the height of the display apparatus 101 and the height of the human eye meets that the user is within a viewing angle range when viewing a virtual image. The second drive apparatus 1130 is configured to adjust a height of the seat 1120 based on a third adjustment amount.

Generally, after the display apparatus 101 is in a display state, the height of the display apparatus 101 no longer changes. Therefore, to meet that the user is within the viewing angle range when viewing the virtual image, the height of the human eye needs to be adjusted to a position at which the relative height between the height of the human eye and the height of the display apparatus 101 is approximately met. In other words, to ensure comfortable viewing of the user, the relative height between the height of the display apparatus 101 and the height of the human eye is fixed. For example, as shown in FIG. 11, if the height of the human eye is a position 1, because a position at which the relative height between the height of the human eye and the height of the display apparatus 101 is met is a position 2, the seat needs to be adjusted from a height 1 to a height 2. Specifically, in some embodiments, after the user sits in the seat 1120, the third obtaining apparatus 1110 obtains user information, and sends the user information to the processing apparatus 520. The processing apparatus 520 determines a third adjustment amount AH1 of the height of the seat based on the user information and the relative height. Alternatively, in some other embodiments, after the user sits in the seat 1120, the third obtaining apparatus 1110 obtains user information, and sends the user information to the processing apparatus 520. The processing apparatus 520 determines a target height of the human eye based on the height of the display apparatus 101, and determines a third adjustment amount ΔH1 of the height of the seat based on the user information and the target height. Then, the processing apparatus 520 sends an adjustment message to the second drive apparatus 1130, so that the second drive apparatus 1130 adjusts the height of the seat by ΔH1 based on the adjustment message. For example, the adjustment message includes a specific adjustment amount, for example, the adjustment amount ΔH1. Then, the second drive apparatus 1130 adjusts the height of the seat based on the adjustment amount ΔH1.

It should be noted that, in the solutions of this application, the user information includes but is not limited to at least one of the following: the height of the human eye of the user, a height of the user, a human-eye position in an image, and a weight of the user. The height of the human eye of the user is a height of the human eye (or a line of sight of the human eye or a pupil center) relative to the floor of the cockpit when the human eye looks straight ahead. It may be understood that, when the user information is the height of the human eye of the user, the height of the user, or the human-eye position in the image, the user information may be obtained by the foregoing first obtaining apparatus 510. For example, the height of the human-eye, the height of the user, and the human-eye position in the image are obtained by using an image detector. In this case, the system 1100 may not include the third obtaining apparatus 1110. When the user information is the weight of the user, the third obtaining apparatus 1110 may be a pressure detector, configured to detect the weight of the user, and send weight information to the processing apparatus 520.

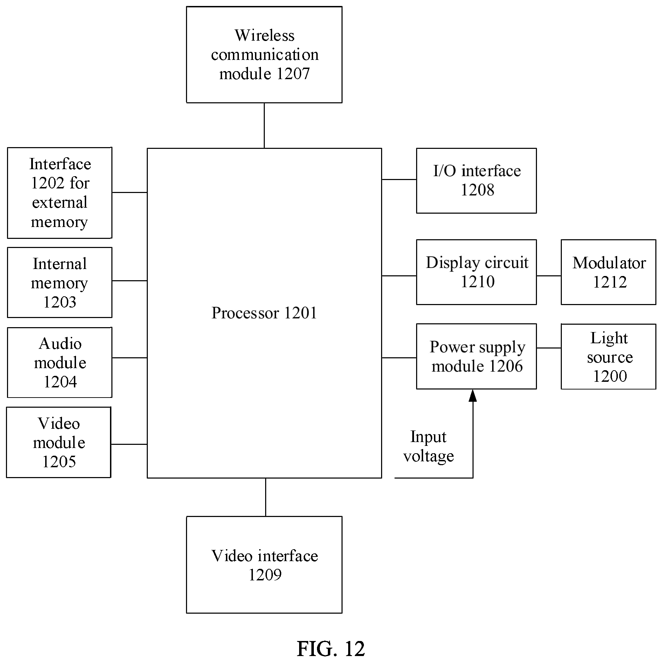

FIG. 12 is a diagram of a circuit of a display apparatus according to an embodiment of this application. As shown in FIG. 12, the circuit in the display apparatus mainly includes a host processor (host CPU) 1201, an interface 1202 for external memory, an internal memory 1203, an audio module 1204, a video module 1205, a power supply module 1206, a wireless communication module 1207, an I/O interface 1208, a video interface 1209, a display circuit 1210, and a modulator 1212. The host processor 1201 may be connected, through a bus, to peripheral elements of the host processor, such as the interface 1202 for external memory, the internal memory 1203, the audio module 1204, the video module 1205, the power supply module 1206, the wireless communication module 1207, the I/O interface 1208, the video interface 1209, and the display circuit 1210. The host processor 1201 may be referred to as a front-end processor.

In addition, the diagram of the circuit in this embodiment of this application does not constitute a specific limitation on the display apparatus. In some other embodiments of this application, the display apparatus may include more or fewer components than components shown in the figure, some components may be combined, some components may be split, or different components may be arranged. The components shown in the figure may be implemented by hardware, software, or a combination of software and hardware.

The host processor 1201 includes one or more processing units. For example, the host processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-Network Processing Unit, NPU), and/or the like. Different processing units may be independent components, or may be integrated into one or more processors.

A memory may be further disposed in the host processor 1201, and is configured to store instructions and data. In some embodiments, the memory in the host processor 1201 is a cache. The memory may store instructions or data just used or cyclically used by the host processor 1201. If the host processor 1201 needs to use the instructions or the data again, the host processor may directly invoke the instructions or the data from the memory. This avoids repeated access and reduces waiting time of the host processor 1201, so that system efficiency is improved.

In some embodiments, the display apparatus may further include a plurality of input/output (Input/Output, I/O) interfaces 1208 connected to the host processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device like a mouse, a touchpad, a keyboard, a camera, a speaker/horn, a microphone, or the like, or may be connected to a physical button (for example, a volume button, a brightness adjustment button, a power-on/off button, or the like) on the display apparatus.

The interface 1202 for external memory may be configured to connect to an external storage card, for example, a micro-SD card, to extend a storage capability of the display apparatus. The external storage card communicates with the host processor 1201 through the interface 1202 for external memory, to implement a data storage function.

The internal memory 1203 may be configured to store computer-executable program code. The executable program code includes instructions. The internal memory 1203 may include a program storage area and a data storage area. The program storage area may store an operating system, an application required by at least one function (for example, a call function or a time setting function), and the like. The data storage area may store data (such as a phone book and world time) created in a process of using the display apparatus, and the like. In addition, the internal memory 1203 may include a high-speed random access memory, or may include a non-volatile memory, for example, at least one magnetic disk storage device, a flash memory, or a universal flash storage (Universal Flash Storage, UFS). The host processor 1201 executes various functional applications and data processing of the display apparatus by running the instructions stored in the internal memory 1203 and/or the instructions stored in the memory disposed in the host processor 1201.

The display apparatus may implement an audio function, for example, music playing and calling, through the audio module 1204, the application processor, and the like.

The audio module 1204 is configured to convert digital audio information into an analog audio signal output, and is also configured to convert an analog audio input into a digital audio signal. The audio module 1204 may be further configured to encode and decode an audio signal, for example, perform voice playing or voice recording. In some embodiments, the audio module 1204 may be disposed in the host processor 1201, or some functional modules of the audio module 1204 are disposed in the host processor 1201.

The video interface 1209 may receive an audio and video signal input externally, and may be specifically a high definition multimedia interface (High Definition Multimedia Interface, HDMI), a digital visual interface (Digital Visual Interface, DVI), a video graphics array (Video Graphics Array, VGA), or a display port (Display port, DP), or the like. The video interface 1209 may further output a video. When the display apparatus is used as a vehicle-mounted display, the video interface 1209 may receive a speed signal and a power signal that are input by a nearby device, and may further receive a VR video signal input externally. When the display apparatus is used, the video interface 1209 may receive a video signal input by an external computer or terminal device.

The video module 1205 may decode a video input through the video interface 1209, for example, perform H.264 decoding. The video module may further encode a video collected by the display apparatus, for example, perform H.264 encoding on a video collected by an external camera. In addition, the host processor 1201 may also decode the video input through the video interface 1209, and then output a decoded image signal to the display circuit 1210.

The display circuit 1210 and the modulator 1212 are configured to display a corresponding image. In this embodiment, the video interface 1209 receives a video source signal input externally, the video module 1205 performs decoding and/or digitization processing and outputs one or more image signals to the display circuit 1210, and the display circuit 1210 drives, based on the input image signal, the modulator 1212 to perform imaging on incident polarized light, to output imaging light. The host processor 1201 may also output one or more image signals to the display circuit 1210.

In this embodiment, the display circuit 1210 and the modulator 1212 belong to electronic elements in the image generation unit, and the display circuit 1210 may be referred to as a drive circuit.

The power supply module 1206 is configured to supply power to the host processor 1201 and a light source 1200 based on input electric power (for example, a direct current). The power supply module 1206 may include a rechargeable battery, and the rechargeable battery may supply power to the host processor 1201 and the light source 1200. Light emitted by the light source 1200 may be transmitted to the modulator 1212 for imaging, to form an image optical signal.

The wireless communication module 1207 may enable the display apparatus to perform wireless communication with the outside, and may provide wireless communication solutions such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, and an infrared (Infrared, IR) technology. The wireless communication module 1207 may be one or more devices integrating at least one communication processing module. The wireless communication module 1207 receives an electromagnetic wave through the antenna, performs frequency modulation and filtering processing on the electromagnetic wave signal, and sends a processed signal to the host processor 1201. The wireless communication module 1207 may further receive a to-be-sent signal from the host processor 1201, perform frequency modulation and amplification on the signal, and convert a processed signal into an electromagnetic wave for radiation through the antenna.

In addition, video data decoded by the video module 1205 may be input through the video interface 1209 and received by the wireless communication module 1207 in a wireless manner or read from an external memory. For example, the display apparatus may receive video data from a terminal device or a vehicle-mounted entertainment system through a wireless local area network in a vehicle. The display apparatus may further read audio/video data stored in the external memory.

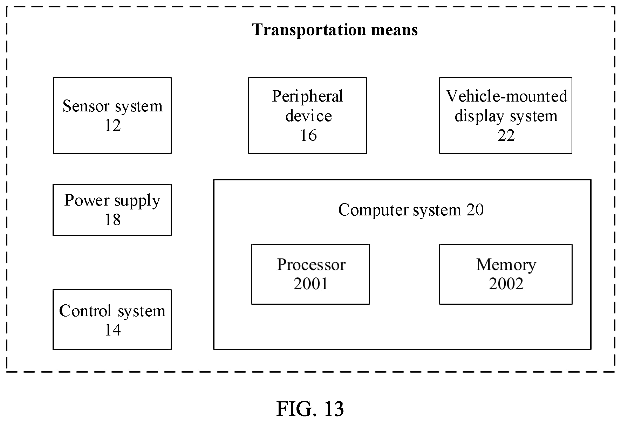

The foregoing display apparatus may be mounted on a transportation means. FIG. 13 is a diagram of a possible functional framework of a transportation means according to an embodiment of this application.

As shown in FIG. 13, the functional framework of the transportation means may include various subsystems, for example, a sensor system 12, a control system 14, one or more peripheral devices 16 (one is shown as an example in the figure), a power supply 18, a computer system 20, and a vehicle-mounted display system 22. Optionally, the transportation means may further include another functional system, for example, an engine system that supplies power to the transportation means. This is not limited herein in this application.

The sensor system 12 may include several detection apparatuses. The detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like, and this is not limited in this application.

The control system 14 may include a plurality of elements, for example, a steering unit, a brake unit, a lighting system, an autonomous driving system, a map navigation system, a network time system, and an obstacle avoidance system shown in the figure. Optionally, the control system 14 may further include elements such as a throttle controller and an engine controller that are configured to control a traveling speed of a vehicle. This is not limited in this application.

The peripheral device 16 may include several elements such as a communication system, a touchscreen, a user interface, a microphone, and a speaker shown in the figure. The communication system is configured to implement network communication between the transportation means and another device other than the transportation means. During actual application, the communication system may implement network communication between the transportation means and another device by using a wireless communication technology or a wired communication technology. The wired communication technology may mean that the vehicle communicates with another device through a network cable, an optical fiber, or the like.

The power supply 18 represents a system used for providing power or energy for the vehicle, and may include but is not limited to a rechargeable lithium battery or a lead-acid battery. During actual application, one or more battery components in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). During actual application, the memory 2002 is also disposed inside the computer system 20, or may be disposed outside the computer system 20, for example, used as a cache in the transportation means. This is not limited in this application.

The processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. In this application, the memory 2002 may store a set of program code used to control the vehicle. The processor 2001 may control safe traveling of the vehicle by invoking the program code. A manner of implementing safe traveling of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the diagram of the functional framework of the vehicle, such as the sensor and the GPS in the sensor system. For example, the computer system 20 may control a traveling direction, a traveling speed, or the like of the transportation means based on data input of the sensor system 12. This is not limited in this application.

The vehicle-mounted display system 22 may include several elements, for example, a controller and a vehicle-mounted display. The controller is configured to generate an image (for example, an image of VR content) based on a user instruction, and send the image to the vehicle-mounted display for display. The vehicle-mounted display may include an image generation unit, a window unit, and an image magnification unit. A passenger may view, through the window unit, a target image presented by the vehicle-mounted display. Functions of some elements in the vehicle-mounted display system may alternatively be implemented by another subsystem of the vehicle. For example, the controller may alternatively be an element in the control system.

FIG. 13 in this application shows that four subsystems are included. The sensor system 12, the control system 14, the computer system 20, and the vehicle-mounted display system 22 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

The transportation means may be a car, a truck, a bus, a ship, an airplane, a helicopter, an entertainment vehicle, a train, or the like. This is not particularly limited in embodiments of this application.

Unless otherwise defined, a technical term or a scientific term used herein should have a general meaning understood by a person of ordinary skill in the art of the present disclosure.

The foregoing descriptions are merely embodiments of this application, but are not intended to limit this application. Any modification, equivalent replacement, or improvement made based on this application shall fall within the protection scope of this application.

## Claims

1. A display system, comprising: a display apparatus and a first drive apparatus, wherein the display apparatus is mounted in a dashboard of a cockpit, the display apparatus comprises an image generation unit, an image magnification unit, a window unit, and a housing, the window unit comprises a first surface and a second surface, the housing comprises a third surface and a fourth surface, and an end that is of the third surface and that is close to the fourth surface is closely connected to an end that is of the fourth surface and that is close to the third surface, wherein
the image generation unit is configured to emit first imaging light to the window unit, wherein the first imaging light is used to generate a first virtual image;
the window unit is configured to reflect, on the first surface, the first imaging light that is from the image generation unit to the image magnification unit, and transmit, through the first surface to the second surface, the first imaging light that is from the image magnification unit, for a human eye to view the first virtual image through the first imaging light emitted from the second surface;
the image magnification unit is configured to reflect the first imaging light that is from the window unit to the window unit;
the housing is configured to enclose the image generation unit and the image magnification unit, wherein an end that is of the third surface and that is away from the fourth surface is connected to an upper edge of the window unit, and an end that is of the fourth surface and that is away from the third surface is connected to a lower edge of the window unit, for the display apparatus to form an enclosed whole having internal space and the first surface of the window unit to be enclosed in the internal space; and
the first drive apparatus is configured to adjust a status of the display apparatus to a stowed state or a display state, wherein the stowed state is a state in which the second surface is embedded into the dashboard, for the third surface to form a part of a knee protection panel of the dashboard and the fourth surface to form a part of a dashboard surface of the dashboard, the display state is a state in which the third surface is separated from the knee protection panel of the dashboard, and the fourth surface is separated from the dashboard surface of the dashboard, for the second surface to be opposite to the human eye.

2. The display system according to claim 1, wherein when the display apparatus is in the stowed state, a radian of a joint between the third surface and the fourth surface is the same as a radian between the knee protection panel and the dashboard surface.

3. The display system according to claim 1, wherein when the display apparatus is in the display state, the dashboard surface and a position used to stow the display apparatus present a stepped surface.

4. The display system according to any one of claims 1 to 3, wherein the first drive apparatus is mounted inside the display apparatus or in the dashboard.

5. The display system according to any one of claims 1 to 4, wherein the display apparatus further comprises a connection unit, and the connection unit is connected to the first drive apparatus;
the first drive apparatus is specifically configured to drive the connection unit to operate; and
the connection unit is configured to adjust the status of the display apparatus to the stowed state or the display state during operating.

6. The display system according to any one of claims 1 to 5, wherein the first drive apparatus is further configured to adjust a first angle of the display apparatus to a second angle, for a user to view the first virtual image at the second angle through the window unit.

7. The display system according to claim 6, wherein the display system further comprises a first obtaining apparatus and a processing apparatus, and the first obtaining apparatus is connected to the processing apparatus;
the first obtaining apparatus is configured to: when the display apparatus is at the first angle, obtain one or more first images comprising the human eye, and send the one or more first images to the processing apparatus;
the processing apparatus is configured to generate a first adjustment amount based on the one or more first images, and send the first adjustment amount to the first drive apparatus; and
the first drive apparatus is specifically configured to adjust the first angle to the second angle based on the first adjustment amount.

8. The display system according to claim 7, wherein
the first obtaining apparatus is further configured to: when the display apparatus is at the second angle, obtain one or more second images comprising the human eye, and send the one or more second images to the processing apparatus;
the processing apparatus further generates a second adjustment amount based on the one or more second images, and sends the second adjustment amount to the image generation unit;
the image generation unit is configured to: generate an image of a corresponding size based on the second adjustment amount, and emit second imaging light;
the window unit is configured to reflect the second imaging light that is from the image generation unit to the image magnification unit, and transmit the second imaging light that is from the image magnification unit, for the user to view, at the second angle through the window unit, a second virtual image formed by the second imaging light; and
the image magnification unit is configured to reflect the second imaging light that is from the window unit to the window unit.

9. The display system according to claim 7, wherein the display system further comprises: a second obtaining apparatus, a seat, and a second drive apparatus, wherein the user sits in the seat to view the first virtual image, the second drive apparatus is connected to the seat, and the second drive apparatus is connected to the processing apparatus;
the second obtaining apparatus is configured to obtain user information, and send the user information to the processing apparatus;
the processing apparatus is configured to generate a third adjustment amount based on the user information and a relative height between a height of the display apparatus and a height of the human eye, and send the third adjustment amount to the second drive apparatus, wherein the height of the display apparatus is a height of a center of the window unit of the display apparatus relative to a floor of the cockpit, the height of the human eye is a height of the human eye relative to the floor of the cockpit, and the relative height between the height of the display apparatus and the height of the human eye meets that the user is within a viewing angle range when viewing the first virtual image; and
the second drive apparatus is configured to adjust a height of the seat based on the third adjustment amount.

10. The display system according to claim 9, wherein the user information comprises at least one of the following: the height of the human eye, a height of the user, a human-eye position in an image, and a weight of the user.

11. A transportation means, comprising the display system according to any one of claims 1 to 10.

12. A cockpit system, comprising the display system according to any one of claims 1 to 10.
